# EUROPÄISCHE PATENTSCHRIFT

(11) **EP 3 445 538 B1**
(45) Veröffentlichungstag und Bekanntmachung des Hinweises auf die Patenterteilung: **13.05.2020**
(21) Anmeldenummer: 17726544.4
(22) Anmeldetag: 19.04.2017
(51) Int. Cl.: B25J 9/16

(54) **VERFAHREN ZUR STEUERUNG EINER MEHRZAHL VON MOBILEN FAHRERLOSEN MANIPULATORSYSTEMEN**
METHOD FOR CONTROLLING A PLURALITY OF MOBILE DRIVERLESS MANIPULATOR SYSTEMS
PROCÉDÉ DE COMMANDE D'UNE PLURALITÉ DE SYSTÈMES DE MANIPULATION MOBILES AUTONOMES

(30) Priorität: 21.04.2016 DE 102016206781
(43) Veröffentlichungstag der Anmeldung: 27.02.2019
(73) Patentinhaber: KUKA Deutschland GmbH, 86165 Augsburg (DE)
(72) Erfinder: KÜMMERLE, Rainer, 81539 München (DE); PFAFF, Patrick, 86163 Augsburg (DE)
(74) Vertreter: Oelke, Jochen
(86) Internationale Anmeldenummer: PCT/EP2017/059285
(87) Internationale Veröffentlichungsnummer: WO 2017/182520

(56) Entgegenhaltungen:
- DE-A1-102014 002 821
- US-A1- 2005 149 256
- US-B2- 9 056 754

## Beschreibung

### Technischer Bereich

Die vorliegende Erfindung betrifft ein Verfahren zur Steuerung einer Mehrzahl von mobilen fahrerlosen Manipulatorsystemen, insbesondere fahrerlosen Transportfahrzeugen in einem Logistikumfeld zur Bewegung von Objekten, sowie ein entsprechendes System zur Durchführung des Verfahrens.

### Technischer Hintergrund

In modernen Produktionsbetrieben oder Logistikumgebungen werden häufig mobile, fahrerlose Manipulatorsysteme, insbesondere Transportsysteme, eingesetzt, um beispielsweise Objekte, wie Material, Werkstücke oder Waren, zu bearbeiten oder von einer Position zu einer nächsten zu transportieren. Die mobilen Manipulatorsysteme können auch Handhabungsgeräte aufweisen, wie beispielsweise Manipulatoren oder Industrieroboter, um diese in einer Umgebung im Wesentlichen frei bewegen zu können. Ein fahrerloses mobiles Manipulatorsystem kann beispielsweise ein Roboterfahrzeug umfassen, welches multidirektional und insbesondere omnidirektional beweglich ist. Üblicherweise weisen die Systeme eigene Antriebe auf und werden automatisch gesteuert. Hierzu kann beispielsweise eine fahrzeuginterne Steuereinrichtung verwendet werden, welche entsprechende Antriebe des fahrerlosen Systems ansteuert, um eine gewünschte Bewegung des Systems zu bewirken. Der Steuereinrichtung kann ein Programm zugrunde liegen, welches die Bewegung des Systems, beispielsweise Richtung und Geschwindigkeit, vorgibt.

Um einen sicheren Betrieb eines derartigen Manipulatorsystems zu ermöglichen, sind diese häufig mit Sensoren, wie etwa Laserscannern, ausgerüstet, mit denen zum einen ein sogenanntes Schutzfeld (häufig auch Sicherheitsfläche oder Sicherheitsbereich genannt) überwacht werden kann und/oder mit denen sich das mobile System anhand von Merkmalen in der Umgebung orientieren kann. Die Sensoren dienen sozusagen als "Augen" des mobilen Systems. Eine der Fähigkeiten eines mobilen Manipulatorsystems besteht darin, sich in einer Umgebung orientieren zu können, also zu wissen, wie seine Umgebung aussieht und wo er sich darin befindet. Ist z.B. Umgebungsinformation in Form einer Karte der Umgebung vorhanden, können sich mobile Manipulatorsysteme mit Hilfe ihrer Sensoren anhand von Orientierungspunkten in der Umgebung selbst lokalisieren und ihre Position in der Karte bestimmen, so dass eine genaue und autonome Bewegung der Systeme in der Umgebung möglich ist.

Zur Steuerung derartiger mobiler Systeme ist eine Reihe von unterschiedlichen Verfahren bekannt, die einzeln oder in Kombination verwendet werden können. Beispielsweise verwenden mobile Manipulatorsysteme häufig ein SLAM-Verfahren (Simultaneous Localization and Mapping) um mittels Sensoren eine Karte der Umgebung zu erlernen. Im autonomen Betrieb werden die aktuellen Sensordaten mit dieser erlernten Karte zusammen mit beispielsweise Odometrie-Messungen integriert, um eine sichere und zuverlässige Bewegung des Systems in der Umgebung zu ermöglichen.

In der US 9,056,754 B2 ist ein Verfahren zur Steuerung autonomer industrieller Fahrzeuge vorbekannt, bei dem dynamisch platzierte Objekte als Orientierungspunkte verwendet werden. Nach diesem Dokument sollen beispielsweise Objekte, wie etwa zu handhabende Waren in einem Logistikumfeld (wie einem Warenlager), an einen bestimmten Punkt innerhalb einer Umgebung platziert werden und anschließend die Position und Pose dieses Objekts bestimmt werden, in dem die Positionsdaten (wie insbesondere Daten zu Position und Pose) des Fahrzeugs verwendet werden, welches das Objekt platziert hat. Anschließend wird die so bestimmte bzw. geschätzte Pose des Objekts verwendet, um eine vorhandene Karte der Umgebung zu aktualisieren. Das platzierte Objekt wird bei der Steuerung des Fahrzeugs berücksichtigt, und kann beispielsweise als Orientierungspunkt ("landmark") zur Orientierung des Fahrzeugs innerhalb der Umgebung dienen.

Beim Einsatz von mobilen Manipulatorsystemen ist die Umgebung in der Regel nicht statisch, sondern verändert sich ständig, indem beispielsweise die von den mobilen Manipulatorsystemen zu handhabenden Objekte bewegt werden. Bei einer Kooperation einer Mehrzahl von mobilen Manipulatorsystemen (d. h. zwei oder mehr Manipulatorsysteme) kann es daher vorkommen, dass eines der Systeme bereits platzierte Objekte um bewegt, die von anderen Manipulatorsystemen zur Orientierung benötigt werden.

Der vorliegenden Erfindung liegt die Aufgabe zugrunde, ein Verfahren zur Steuerung einer Mehrzahl von mobilen fahrerlosen Manipulatorsystemen bereitzustellen, welches die Nachteile des Standes der Technik möglichst vermeidet und insbesondere einen effizienten Betrieb der Mehrzahl von Manipulatorsystemen ermöglicht.

Diese und weitere Aufgaben, die aus der folgenden Beschreibung ersichtlich werden, werden durch ein Verfahren gemäß Anspruch 1 und ein System zum Durchführen des Verfahrens nach Anspruch 15 gelöst.

### Inhalt der Erfindung

Die vorliegende Erfindung betrifft ein Verfahren zur Steuerung einer Mehrzahl (d. h. zwei oder mehr) von mobilen fahrerlosen Manipulatorsystemen, wie insbesondere fahrerlosen Transportfahrzeugen, wie sie etwa in einem Logistikumfeld in einem Warenlager oder einem Produktionsbetrieb zur Bewegung von Objekten, zum Einsatz kommen können. Die Manipulatorsysteme weisen Sensoren zur Orientierung auf und verfügen über Kommunikationsmittel, um mit zumindest einer zentralen Steuereinrichtung zu kommunizieren. Das Verfahren umfasst dabei die folgenden Schritte: Bereitstellen von Umgebungsinformation durch die zumindest eine zentrale Steuereinrichtung, Detektion eines von den mobilen fahrerlosen Manipulatorsystemen zu manipulierenden Objekts in der Umgebung und Bestimmen von Position und Pose des detektierten Objekts, Aktualisierung der Umgebungsinformation mit der Position und vorzugsweise auch der Pose des detektierten Objekts und dann Berücksichtigung der Position und vorzugsweise auch der Pose des detektieren Objekts bei der Bahnplanung der mobilen fahrerlosen Manipulatorsysteme, in dem vor einer Manipulation eines detektierten Objekts durch ein erstes mobiles fahrerloses Manipulatorsystem geprüft wird, ob das detektierte Objekt für die Orientierung eines zweiten fahrerlosen Manipulatorsystems benötigt wird. Die Bezeichnungen "erstes" und "zweites" Manipulatorsystem dienen hier nur zur eindeutigen Bestimmung der Systeme und stellen keine zahlenmäßige Beschränkung der Systeme dar.

Die zentrale Steuereinrichtung kann beispielsweise aus einem oder mehreren Computern, zugehörigen Kommunikationsmitteln, Befehls-Eingabevorrichtungen etc. bestehen und Umgebungsinformation beispielsweise in Form einer Karte insbesondere an die mobilen fahrerlosen Manipulatorsysteme (im Folgenden auch als Manipulatorsysteme oder Systeme abgekürzt) bereitstellen. Die Detektion eines zu manipulierenden Objekts in der Umgebung und das Bestimmen von Position und Pose des detektierten Objekts kann beispielsweise durch die Manipulatorsysteme selbst erfolgen, insbesondere mit Hilfe der Sensoren dieser Systeme. Es ist jedoch auch denkbar mittels der Sensoren nur Informationen über die Umgebung zu sammeln und diese Daten an die zentrale Steuereinrichtung zu übertragen, wobei die eigentliche Detektion und das Bestimmen von Position und Pose dann in der Steuereinrichtung erfolgt. Die zu manipulierenden Objekte können beispielsweise Werkstücke oder Waren oder ähnliches sein und unter einer Manipulation des Objekts wird bspw. die Bearbeitung des Objekts verstanden, insbesondere jedoch eine Veränderung der Position und/oder Pose, d. h. eine Bewegung des Objekts.

Bei der Aktualisierung der Umgebungsinformation mit der Position und Pose des detektierten Objekts kann beispielsweise eine Karte der Umgebung in der zentralen Steuereinrichtung aktualisiert werden. Das detektierte Objekt kann in der Karte beispielsweise als Hindernis eingetragen werden, welches bei der Bahnplanung der Manipulatorsysteme berücksichtigt werden muss. Vorteilhaft ist hierbei, wenn nicht nur die Position des Objekts, sondern auch die Pose des Objekts berücksichtigt wird, da auf diese Weise eine besonders effiziente Bahnplanung möglich ist, da Manipulatorsysteme dann sehr nahe um die Objekte herum bewegt werden können. Denkbar ist aber auch, dass bei der Aktualisierung der Umgebungsinformation beispielsweise Position und Art des detektierten Objekts hinterlegt wird. Die Manipulatorsysteme können anhand dieser Information dann selber die Pose des Objekts in der Umgebung bestimmen. Bei der Aktualisierung der Umgebungsinformation wird in diesem Fall die Pose also indirekt berücksichtigt.

Bei der Bahnplanung der mobilen fahrerlosen Manipulatorsysteme werden Position und Pose des detektierten Objekts berücksichtigt, indem vor einer Manipulation des detektierten Objekts (beispielsweise einer Veränderung der Position oder Pose des Objekts) durch ein erstes Manipulatorsystem geprüft wird, ob das detektierte Objekt für die Orientierung eines zweiten Manipulatorsystems benötigt wird. Man berücksichtigt bei der Bahnplanung also nicht nur die Anwesenheit der detektierten Objekte, damit die Systeme etwa nicht mit diesen zusammenstoßen, sondern auch, dass die Objekte teilweise für die Orientierung der mobilen Systeme benötigt werden. Die detektierten Objekte werden mithin als Orientierungspunkte in der Umgebung verwendet. Daher darf beispielsweise ein Objekt nicht ohne weiteres von einem ersten Manipulatorsystem bewegt werden, wenn ein zweites, bereits einer Bahnplanung folgendes System, dieses Objekt noch zur Orientierung benötigt. Bei der Bahnplanung der Manipulatorsysteme wird also bspw. berücksichtigt, ob die Bahnplanung eines ersten Systems, bei der beispielsweise die Bewegung eines detektierten Objekts vorgesehen ist, die Bahnplanung bzw. Bewegung eines anderen, zweiten Systems beeinträchtigt.

Die Detektion der zu manipulierenden bzw. zu bewegenden Objekte kann insbesondere mittels Sensoren erfolgen, die entweder an den Manipulatorsystemen selbst vorgesehen sind, oder es können auch stationär angebrachte Sensoren zum Einsatz kommen, die beispielsweise einen bestimmten Bereich der Umgebung überwachen.

Vorzugsweise sind die Sensoren der Manipulatorsysteme optische Sensoren, insbesondere Laserscanner oder auch Stereokameras, die allesamt vorzugsweise die Durchführung von Abstandsmessungen zulassen. Mittels optischer Sensoren werden üblicherweise Abstandsmessungen durchgeführt, um Objekte im Raum zu erfassen bzw. zu erkennen.

Vorzugsweise erfolgt die Detektion des zu manipulierenden bzw. bewegenden Objekts sowie von Position und Pose des Objekts mit Hilfe der optischen Sensoren der Manipulatorsysteme. Dies kann etwa dadurch erfolgen, dass ein Manipulatorsystem ein zu bewegendes Objekt an einer bestimmten Position positioniert (abstellt) und die entsprechenden Informationen über Position und Pose des abgestellten Objekts an die zentrale Steuereinrichtung kommuniziert. Die anderen vorhandenen Manipulatorsysteme haben somit Zugriff auf diese Informationen durch die zentrale Steuereinrichtung und können die bekannte Position und Pose des abgestellten Objekts berücksichtigen. Die Detektion bzw. Erkennung des Objekts sowie der Pose des Objekts kann insbesondere auf einem Vergleich der erfassten Sensordaten mit Modellen von zu erkennenden Objekten basieren. Verfahren zur sensorbasierten Erkennung von dreidimensionalen Objekten sind dem Fachmann grundsätzlich bekannt, so dass hier auf eine weitere Erläuterung verzichtet werden kann.

Vorzugsweise erfolgt der Vergleich der erfassten Sensordaten mit Modellen von zu erkennenden Objekten dezentral in entsprechenden Datenverarbeitungsvorrichtungen der Manipulatorsysteme. Die Detektion bzw. Bestimmung eines Objekts sowie die Detektion der Pose des Objekts erfolgt also nicht beispielsweise in der zentralen Steuereinrichtung, sondern lokal in den einzelnen Manipulatorsystemen, sobald deren Sensoren ein zu bewegendes Objekt geeignet erfassen. Dies hat den Vorteil, dass die Objekterkennung sehr schnell durchgeführt werden kann, da keine Datenübertragung zwischen der zentralen Steuereinrichtung und den Manipulatorsystemen nötig ist. Die Objekterkennung ist ein im Hintergrund laufender Task, der die aktuellen Aufgaben des Manipulatorsystems nicht beeinflusst. Die zu erkennenden Objekte sind typischerweise bekannt und die Manipulatorsysteme verfügen beispielsweise über geeignete Informationen (Modelle), wie etwa den Umriss des Objekts, um es mit den Daten der Sensoren abzugleichen. Ein erlernen von entsprechenden Modellen durch die Manipulatorsysteme ist ebenso möglich. Durch die Kommunikationsmittel können einzelne Manipulatorsysteme auch gezielt nach Objekten suchen und somit im Sinne von verteilter Intelligenz ihre eigenen Positionsschätzungen verbessern.

Vorzugsweise detektieren die Manipulatorsysteme das zu manipulierende Objekt mit Hilfe ihrer Sensoren und senden eine Nachricht, die repräsentativ für die Position und Pose des Objekts ist, mittels der Kommunikationsmittel an die zentrale Steuereinrichtung zur Aktualisierung der Umgebungsinformation. Die Nachricht kann die Pose und die Unsicherheit der Posenschätzung enthalten oder aber auch bloße Rohdaten der Sensoren, so dass Position und/oder Pose des Objekts dann von der zentralen Steuereinrichtung bestimmt werden. Indem die Umgebungsinformation aktualisiert wird, können auch den anderen Manipulatorsystemen diese Informationen über Position, Pose und auch Art des Objekts bereitgestellt werden.

Vorzugsweise erfolgt das Senden der Nachricht unter Verwendung von Zeitstempeln, um den genauen Zeitpunkt der Detektion zu erfassen. Die mit Zeitstempeln versehenen Nachrichten werden also bspw. von den einzelnen Manipulatorsystemen in eine Datenbank der zentralen Steuereinrichtung übertragen. Der Zeitstempel der Nachricht wird unter anderem dazu verwendet verzögerte Nachrichten zu erkennen. Beispielsweise kann die zentrale Ablaufsteuerung so den letzten Zustand eines Objekts korrekt abspeichern und beispielsweise an die Manipulatorsysteme kommunizieren.

Vorzugsweise umfasst das Verfahren weiter die Schritte der Verwendung der aktualisierten Umgebungsinformation durch ein Manipulatorsystem zur Schätzung der Position des detektierten Objekts relativ zu dem Manipulatorsystem und um dieses Objekt erneut mittels der Sensoren des Manipulatorsystems zu detektieren. Dies kann beispielsweise vorteilhaft sein, wenn ein Manipulatorsystem eine vorgegebene Bahn abfährt und sich anhand der bereits detektierten Objekte orientieren soll; die detektierten Objekte mithin als Orientierungspunkte nutzt. Beim Abfahren der Bahn kann das Manipulatorsystem anhand der aktualisierten Umgebungsinformationen einschätzen, wann die Sensoren des Manipulatorsystems das detektierte Objekt erfassen sollten. Erfassen die Sensoren das Objekt an der erwarteten Position und in der erwarteten Pose, kann diese Information genutzt werden, um die Genauigkeit der Lokalisierung des Manipulatorsystems zu erhöhen.

Vorzugsweise umfasst das Verfahren weiterhin die Schritte: Verwendung der aktualisierten Umgebungsinformation durch ein Manipulatorsystem zur Schätzung der Position des Objekts relativ zu dem Manipulatorsystem und gezieltes Suchen dieses Objekts durch dieses Manipulatorsystem zur Verbesserung der Positionsschätzung dieses Manipulatorsystems. Wenn es beispielsweise gewünscht ist, dass die Positionsschätzung eines bestimmten Manipulatorsystems verbessert wird, kann dieses System anhand der aktualisierten Umgebungsinformation, wie etwa einer aktualisierten Karte der Umgebung, gezielt das am nächsten liegende detektierte Objekt ansteuern. Wenn die Sensoren des Manipulatorsystems das angesteuerte Objekt an der erwarteten Stelle finden, kann diese Information wiederum zur Verbesserung der Positionsschätzung bzw. der Lokalisierung des Manipulatorsystems verwendet werden.

Vorzugsweise umfasst das Verfahren weiterhin die Schritte der erneuten Detektion des bereits detektierten Objekts mittels der Sensoren eines Manipulatorsystems und der Verwendung der Sensordaten zur Verbesserung der Genauigkeit der Bestimmung von Position und Pose dieses Objekts. Wenn beispielsweise ein Manipulatorsystem an einem bereits detektierten Objekt vorbeifährt, und die Sensoren des Manipulatorsystems das Objekt erfassen, kann hieraus erneut die Position und Pose des Objekts bestimmt werden (d. h. eine zweite Schätzung von Position und Pose erstellt werden) und die Ergebnisse dieser zweiten Detektion können zur Verbesserung der Genauigkeit verwendet werden. Diese genaueren Informationen können dann wiederum bei der Aktualisierung der Umgebungsinformation berücksichtigt werden, um genauere Umgebungsinformation, wie etwa eine genauere Karte der Umgebung, zu erstellen. Die genaueren Informationen können vorteilhaft dazu verwendet werden, um Bewegungen bei veränderter Pose der Objekte neu zu planen oder um die Bahn anzupassen.

Vorzugsweise umfasst das Verfahren weiter den Schritt: wenn das detektierte Objekt für die Orientierung eines zweiten fahrerlosen Manipulatorsystems benötigt wird, entscheiden ob die Bahnplanung für das zweite fahrerlose Manipulatorsystem geändert wird. Es gibt verschiedene Reaktionsstrategien wenn festgestellt wird, dass ein detektiertes Objekt, welches etwa durch das erste mobile fahrerlose Manipulatorsystem bewegt werden soll, für eine erfolgreiche Bewegung eines zweiten Manipulatorsystems benötigt wird. Es ist etwa denkbar, dass die Bewegung des Objekts durch das erste Manipulatorsystem Vorrang hat, und die Bahnplanung für das zweite System daher geändert werden muss. Das zweite Manipulatorsystem wird dann beispielsweise entlang einer Bahn geführt, bei der das zu bewegende Objekt nicht zur Orientierung benötigt wird, da sich das zweite System bei dieser Bahn an anderen Orientierungspunkten orientieren kann.

Vorzugsweise umfasst das Verfahren weiter den Schritt: wenn das detektierte Objekt für die Orientierung eines zweiten fahrerlosen Manipulatorsystems benötigt wird, bestimmen der Zeit, die das Objekt an seiner Position verbleiben muss, bis das zweite Manipulatorsystem seine Orientierung anhand des Objekts abgeschlossen hat. Bei der Bahnplanung der verschiedenen Manipulatorsysteme wird also bspw. berücksichtigt, ob Manipulatorsysteme bestimmte detektierte Objekte zur Orientierung während der Abfahrt ihrer jeweiligen Bahn benötigen. Ist dies beispielsweise der Fall, wird die erwartete Zeit bestimmt, die das Objekt in seiner Pose verbleiben muss, um zu gewährleisten, dass das entsprechende Manipulatorsystem in der Lage ist, das Objekt zu detektieren. Hierfür werden vorzugsweise die Aufträge für ein bestimmtes Objekt entsprechend in einer Queue verwaltet, um die Abhängigkeit von anderen Aufträgen auf die aktuelle Pose des Objekts zu modellieren. Die Aufträge sind hierzu vorzugsweise mit Prioritäten versehen, um bei einem wichtigen (dringenden) Auftrag für beispielsweise den Transport oder die Bewegung eines Objekts entsprechend Anpassungen der bestehenden Pläne anderer betroffener Manipulatorsysteme zu berechnen. Es findet also eine Abwägung zwischen den längeren Fahrten statt, die etwa durch Umwege entstehen und der erwarteten Wartezeit durch den verzögerten Transport auf der anderen Seite. Hat also beispielsweise die Bewegung eines bestimmten detektierten Objekts eine hohe Priorität und wird aber die Anwesenheit dieses Objekts für die Orientierung eines zweiten Manipulatorsystems in einer bestimmten Bahnplanung benötigt, so wird beispielsweise die Bahnplanung für dieses zweite System geändert, damit die Bewegung des Objekts möglichst schnell erfolgen kann. Auch die mobilen fahrerlosen Manipulatorsysteme selbst können im Rahmen dieser Erfindung als Objekte betrachtet werden und zur Verbesserung der Lokalisierung und Planung (anderer) mobiler fahrerloser Manipulatorsysteme verwendet werden.

Die Erfindung betrifft auch ein System zum Handhaben von zu bewegenden Objekten, vorzugsweise in einem Logistikumfeld, umfassend eine Mehrzahl von mobilen fahrerlosen Manipulatorsystemen zur Handhabung der Objekte, wie insbesondere fahrerlosen Transportfahrzeugen, sowie zumindest eine zentrale Steuereinrichtung. Die Manipulatorsysteme weisen Sensoren zur Orientierung auf und verfügen über Kommunikationsmittel, um mit der zentralen Steuereinrichtung zu kommunizieren. Die Steuereinrichtung und die mobilen Manipulatorsysteme sind dabei eingerichtet, um ein Verfahren wie hierin beschrieben durchzuführen.

### Beschreibung bevorzugter Ausführungsbeispiele

Im Folgenden wird die vorliegende Erfindung unter Bezugnahme auf die beiliegenden Figuren beschrieben. Dabei zeigt:
Fig. 1 schematisch eine Lokalisierung eines mobilen Manipulatorsystems mit Hilfe eines detektierten Objekts;
Fig. 2 schematisch verschiedene Bahnplanungen mit und ohne Objekterkennung;
Fig. 3 schematisch Bahnplanungen unter Ausnutzung der Kenntnis von Position und Pose von detektierten Objekten; und
Fig. 4 ein schematisches Ablaufdiagramm eines beispielhaften Verfahrens.

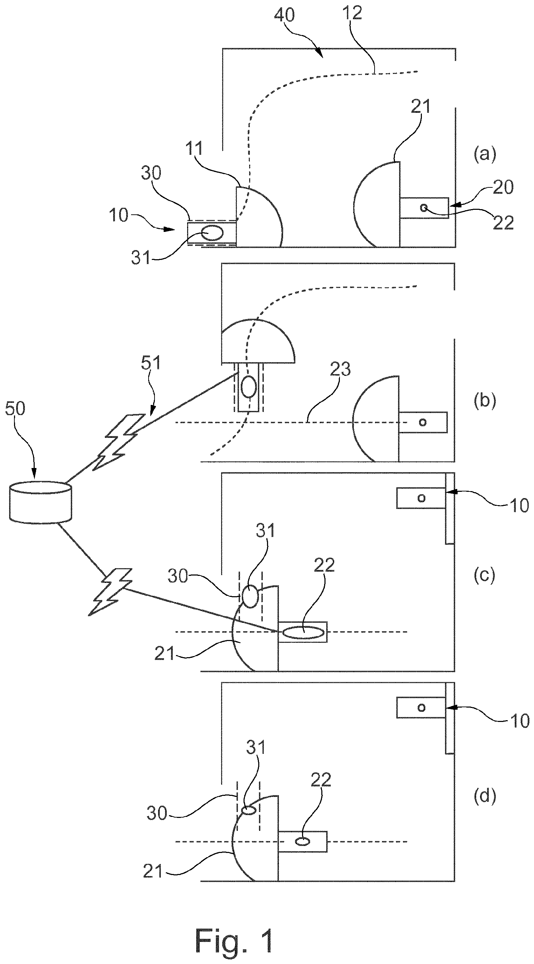

In Fig. 1 ist schematisch ein Beispiel einer kooperativen Lokalisierung mit Hilfe eines detektierten Objekts dargestellt. In dem Beispiel sind zwei mobile fahrerlose Manipulatorsysteme, nämlich fahrerlose Transportfahrzeuge 10 und 20 in einer Umgebung 40 vorgesehen. Die beiden Manipulatorsysteme 10, 20 verfügen über optische Sensoren (nicht gezeigt), nämlich insbesondere Laserscanner, die einen halbkreisförmigen Scanbereich in Fahrtrichtung der Manipulatorsysteme haben. Die Sichtweite der Sensoren bzw. der Scanbereich ist mit den Bezugszeichen 11 bzw. 21 angedeutet (siehe Fig. 1a). Das erste Manipulatorsystem 10 transportiert ein zu bewegendes Objekt 30 und folgt einer Bahnplanung 12. In Fig. 1b hat sich das Manipulatorsystem 10 ein Stück entlang seiner Bahnplanung 12 bewegt und stellt an der angedeuteten Stelle das Objekt 30 ab. Das abgestellte Objekt 30 kann detektiert werden, indem beispielsweise stationäre Sensoren zum Einsatz kommen (nicht abgebildet) oder beispielsweise anhand der Positionsinformation des Manipulatorsystems 10 beim Abstellen des Objekts 30 in der Position in Fig. 1b die Position und Pose des Objekts 30 geschätzt werden. Entsprechende Informationen werden an eine zentrale Steuereinrichtung 50 übertragen, die beispielsweise drahtlos mit den Manipulatorsystemen kommuniziert, wie durch die Linie 51 angedeutet. Die aktualisierten Umgebungsinformationen mit der geschätzten Position und Pose des detektierten Objekts 30 können nun bei der Bahnplanung des zweiten Manipulatorsystems 20 verwendet werden. Die Bahnplanung ist mit der gestrichelten Linie mit dem Bezugszeichen 23 angedeutet. Die Position und Pose des Objekts 30 ist zum Zeitpunkt der Figur 1b nur geschätzt und relativ ungenau. Dies wird durch die Ellipse 31 angedeutet, die in Fig. 1a und 1b relativ groß ist.

In Fig. 1c hat sich das zweite Manipulatorsystem 20 ein Stück entlang seiner Bahnplanung 23 bewegt. Aufgrund dieser Bewegung ist die Lokalisierung des Manipulatorsystems 20 ungenauer als zu Beginn der Bewegung, was durch die im Vergleich zu Figur 1b vergrößerte Unsicherheitsellipse 22 (siehe Figur 1c) angedeutet werden soll. In der in Fig. 1c gezeigten Situation erfassen die Sensoren des Manipulatorsystems 20 das Objekt 30 an einer Position, an der aufgrund der aktualisierten Umgebungsinformation das Objekt 30 ungefähr erwartet wurde. Diese erneute Detektion des Objekts 30 kann dabei zum einen genutzt werden, um Position und Pose des Objekts 30 genauer zu bestimmen. Zum anderen kann sie jedoch auch genutzt werden, um die Positionsschätzung des Manipulatorsystems 20 zu verbessern. Dies ist in Fig. 1d durch die beiden entsprechend verkleinerten Unsicherheitsellipsen 31 und 22 angedeutet.

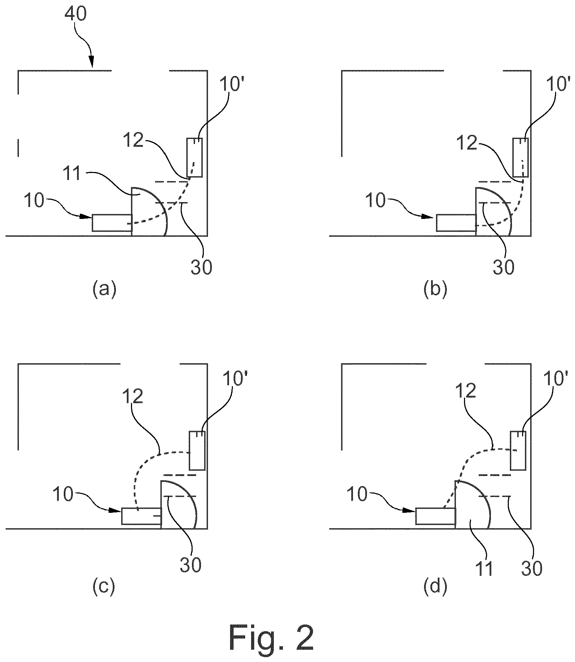

In Fig. 2 sind insgesamt vier schematische Darstellungen 2a bis 2d von möglichen Bahnplanungen für ein Manipulatorsystem gezeigt. Dabei entsprechen die Darstellungen a, b, c einer Bahnplanung ohne Detektion des Objekts 30 und die Abbildung d einer entsprechenden Bahnplanung mit Detektion des Objekts 30. In Fig. 2a ist schematisch ein Manipulatorsystem 10 gezeigt, mit entsprechenden Sensoren, die eine Sichtweite 11 aufweisen. Mit 10' ist der geplante Zielort des Manipulatorsystems 10 angedeutet. Mit dem Bezugszeichen 30 ist wieder ein zu bewegendes Objekt 30 bezeichnet, das bisher bei der Bahnplanung 12 des Manipulatorsystems 10 jedoch nicht verwendet werden konnte, da es noch nicht detektiert wurde. Die Bahnplanung 12 des Manipulatorsystems geht also in der Situation der Fig. 2a davon aus, das Objekt 30 nicht vorhanden ist. In der Situation der Fig. 2a erfassen die Sensoren jedoch einen Teil des Objekts 30, so dass die Bahnplanung 12 dynamisch angepasst werden muss. Wie in Fig. 2b gezeigt, fährt das Manipulatorsystem weiter und passt dynamisch seine Bahn an, da die Sensoren weiterhin eine Blockierung des Weges durch das Objekt 30 detektieren. In der Situation der Fig. 2c stellt das Manipulatorsystem 10 fest, dass es zur Erreichung der Zielposition 10' wieder zurückfahren und einen gänzlich anderen Weg nehmen muss, um das Objekt 30 zu umfahren. Bei einer Bahnplanung mit Kenntnis von Position und Orientierung des Objekts 30 können derartige Umwege vermieden werden.

In der Situation der Fig. 2d wurde das Objekt 30 detektiert und bei der Aktualisierung der Umgebungsinformation durch die zentrale Steuereinrichtung 50 berücksichtigt. Wie in Fig. 2d zu erkennen, kann die Bahnplanung 12 nun von vorneherein die Anwesenheit des Objekts 30 berücksichtigen, so dass das Manipulatorsystem 10 ohne Umwege in die Zielposition 10' fahren kann.

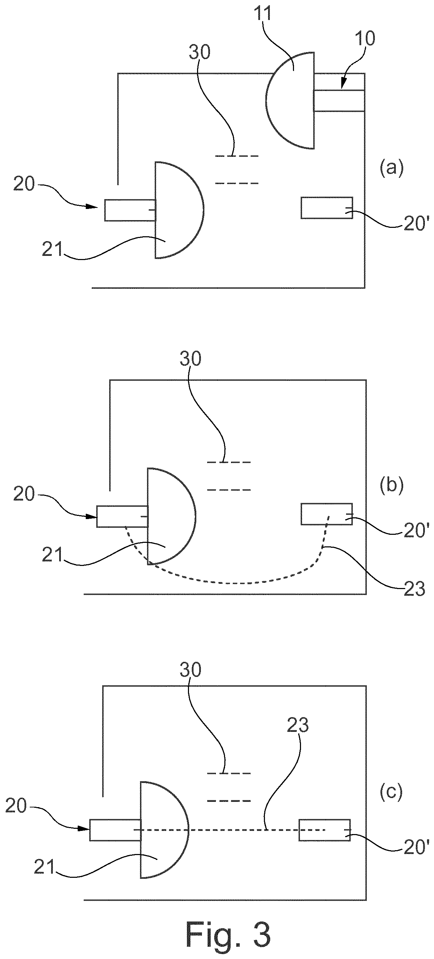

In Fig. 3 soll ein erstes Manipulatorsystem 10 ein zu bewegendes Objekt 30 zu einem anderen Ort transportieren. Ein zweites Manipulatorsystem 20 soll zu seinem Zielort 20' bewegt werden. Für die Bahnplanung des zweiten Manipulatorsystems 20 kann das Objekt 30 als Orientierungspunkt verwendet werden und daher, wie in Fig. 3c angedeutet, kann das Manipulatorsystem 20 auf direktem Wege zu seiner Zielposition 20' geführt werden. Ohne die Berücksichtigung des detektierten Objekts 30 bei der Bahnplanung müsste das Manipulatorsystem 20 den Umweg nehmen, wie er in Abbildung 3b angedeutet ist, da in diesem Beispiel ansonsten keine Merkmale zur genauen Lokalisierung des Manipulatorsystems 20 vorhanden sind und das Manipulatorsystem 20 in diesem Beispiel daher ohne den Orientierungspunkt des detektierten Objekts 30 nicht den direkten Weg fahren kann. Bevor das detektierte Objekt 30 durch den ersten Manipulator 10 bewegt wird, wird daher geprüft, ob das detektierte Objekt 30 für die Orientierung des zweiten mobilen Manipulatorsystems 20 benötigt wird. Da dies hier der Fall ist, wird die Bewegung des Objekts 30 durch das erste Manipulatorsystem 10 zurückgestellt, bis das zweite Manipulatorsystem 20 seine Orientierung anhand des Objekts 30 abgeschlossen hat. Es ist dabei klar, dass das zweite Manipulatorsystem 20 hierfür nicht unbedingt bis in seine Zielposition 20' verfahren werden muss, sondern es genügt, wenn die Sensoren des Manipulatorsystems 20 das Objekt 30 erfassen und somit eine genaue Lokalisierung des Manipulatorsystems 20 ermöglichen.

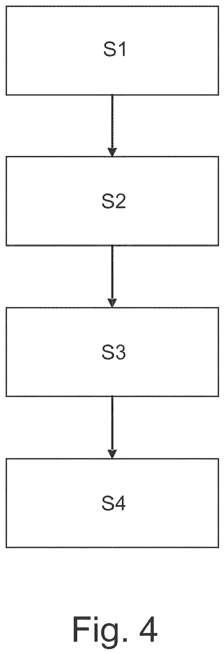

In Fig. 4 ist schematisch ein Ablaufdiagramm des erfindungsgemäßen Verfahrens gezeigt. In Schritt S1 werden Umgebungsinformationen durch eine zentrale Steuereinrichtung bereitgestellt, wie beispielsweise eine Karte der Umgebung, in der sich die mobilen Manipulatorsysteme bewegen sollen. In Schritt S2 wird ein zu bewegendes Objekt in der Umgebung detektiert und die Position und Pose des detektierten Objekts bestimmt. Diese Informationen werden in Schritt S3 genutzt, um die Umgebungsinformation mit der Position und Pose des detektierten Objekts zu aktualisieren. In Schritt S4 wird dann die Position und Pose des detektierten Objekts bei der Bahnplanung der mobilen Manipulatorsysteme berücksichtigt, in dem vor einer Bewegung des detektierten Objekts durch ein erstes mobiles Manipulatorsystem geprüft wird, ob das detektierte Objekt für die Orientierung eines zweiten Manipulatorsystems benötigt wird.

### Bezugszeichenliste:

- 10, 20: mobile fahrerlose Manipulatorsysteme
- 11, 21: Sichtweite der Sensoren
- 30: Objekt
- 22, 31: Unsicherheitsellipse
- 12, 23: Bahnplanung
- 40: Umgebung
- 50: zentrale Steuereinrichtung
- 51: Linie (drahtloser Kommunikationsweg)
- 10', 20': Zielposition des Manipulatorsystems

## Patentansprüche

1. Verfahren zur Steuerung einer Mehrzahl von mobilen fahrerlosen Manipulatorsystemen (10, 20), insbesondere fahrerlosen Transportfahrzeugen in einem Logistikumfeld zur Bewegung von Objekten (30), wobei die Manipulatorsysteme (10, 20) Sensoren zur Orientierung aufweisen und über Kommunikationsmittel verfügen, um mit zumindest einer zentralen Steuereinrichtung (40) zu kommunizieren, welches Verfahren die folgenden Schritte umfasst:
Bereitstellen von Umgebungsinformation durch die zumindest eine zentrale Steuereinrichtung (40);
Detektion eines von den mobilen fahrerlosen Manipulatorsystemen (10, 20) zu manipulierenden Objekts (30) in der Umgebung und Bestimmen von Position und Pose des detektierten Objekts (30);
Aktualisierung der Umgebungsinformation mit der Position und Pose des detektierten Objekts (30);
Berücksichtigung der Position und Pose des detektierten Objekts (30) bei der Bahnplanung der mobilen fahrerlosen Manipulatorsysteme (10, 20), indem vor einer Manipulation des detektierten Objekts (30) durch ein erstes mobiles fahrerloses Manipulatorsystem (10) geprüft wird, ob das detektierte Objekt (30) für die Orientierung eines zweiten mobilen fahrerlosen Manipulatorsystems (20) benötigt wird.

2. Verfahren zur Steuerung einer Mehrzahl von mobilen fahrerlosen Manipulatorsystemen (10, 20) nach Anspruch 1, wobei die Sensoren optische Sensoren sind, insbesondere Laserscanner.

3. Verfahren zur Steuerung einer Mehrzahl von mobilen fahrerlosen Manipulatorsystemen (10, 20) nach Anspruch 2, wobei die Detektion von Position und Pose des zu manipulierenden Objekts (30) mithilfe der optischen Sensoren der Manipulatorsysteme (10, 20) erfolgt, und insbesondere auf einem Vergleich der erfassten Sensor-Daten mit Modellen von zu erkennenden Objekten basiert.

4. Verfahren zur Steuerung einer Mehrzahl von mobilen fahrerlosen Manipulatorsystemen (10, 20) nach Anspruch 3, wobei der Vergleich der erfassten Sensor-Daten mit Modellen von zu erkennenden Objekten dezentral in Datenverarbeitungsvorrichtungen der Manipulatorsysteme (10, 20) erfolgt.

5. Verfahren zur Steuerung einer Mehrzahl von mobilen fahrerlosen Manipulatorsystemen (10, 20) nach einem der vorhergehenden Ansprüche, wobei die Manipulatorsysteme (10, 20) das zu manipulierende Objekt (30) mithilfe ihrer Sensoren detektieren und eine Nachricht repräsentativ für Position und Pose des Objekts mittels der Kommunikationsmittel an die zentrale Steuereinrichtung (40) zur Aktualisierung der Umgebungsinformation senden.

6. Verfahren zur Steuerung einer Mehrzahl von mobilen fahrerlosen Manipulatorsystemen (10, 20) nach dem vorhergehenden Anspruch, wobei das Senden der Nachricht unter Verwendung von Zeitstempeln erfolgt, um den genauen Zeitpunkt der Detektion zu erfassen.

7. Verfahren zur Steuerung einer Mehrzahl von mobilen fahrerlosen Manipulatorsystemen (10, 20) nach dem vorhergehenden Anspruch, wobei die Nachricht die Pose und die Unsicherheit der Posenschätzung für das detektierte Objekt (30) enthält.

8. Verfahren zur Steuerung einer Mehrzahl von mobilen fahrerlosen Manipulatorsystemen nach einem der vorhergehenden Ansprüche, weiter umfassend die Schritte:
Verwendung der aktualisierten Umgebungsinformation durch ein Manipulatorsystem (10, 20) zur Schätzung der Position des detektierten Objekts (30) relativ zu dem Manipulatorsystem (10, 20) und erneute Detektion dieses Objekts mittels der Sensoren dieses Manipulatorsystems.

9. Verfahren zur Steuerung einer Mehrzahl von mobilen fahrerlosen Manipulatorsystemen (10, 20) nach einem der vorhergehenden Ansprüche, weiter umfassend die Schritte:
Verwendung der aktualisierten Umgebungsinformation durch ein Manipulatorsystem (10, 20) zur Schätzung der Position des Objekts (30) relativ zu dem Manipulatorsystem und gezieltes Suchen dieses Objekts (30) durch dieses Manipulatorsystem zur Verbesserung der Positionsschätzung dieses Manipulatorsystems.

10. Verfahren zur Steuerung einer Mehrzahl von mobilen fahrerlosen Manipulatorsystemen (10, 20) nach einem der vorhergehenden Ansprüche, weiter umfassend die Schritte:
Erneute Detektion des bereits detektierten Objekts (30) mittels der Sensoren eines Manipulatorsystems (10, 20) und Verwendung der Sensor-Daten zur Verbesserung der Genauigkeit der Bestimmung von Position und Pose des Objekts.

11. Verfahren zur Steuerung einer Mehrzahl von mobilen fahrerlosen Manipulatorsystemen (10, 20) nach einem der vorhergehenden Ansprüche, weiter umfassend den Schritt:
Wenn das detektierte Objekt (30) für die Orientierung eines zweiten fahrerlosen Manipulatorsystems (20) benötigt wird, entscheiden ob die Bahnplanung für das zweite fahrerlose Manipulatorsystem (20) geändert wird.

12. Verfahren zur Steuerung einer Mehrzahl von mobilen fahrerlosen Manipulatorsystemen (10, 20) nach einem der vorhergehenden Ansprüche, weiter umfassend den Schritt:
Wenn das detektierte Objekt (30) für die Orientierung eines zweiten fahrerlosen Manipulatorsystems (20) benötigt wird, Bestimmen der Zeit, die das Objekt an seiner Position verbleiben muss, bis das zweite Manipulatorsystem seine Orientierung anhand des Objekts abgeschlossen hat.

13. Verfahren zur Steuerung einer Mehrzahl von mobilen fahrerlosen Manipulatorsystemen (10, 20) nach einem der vorhergehenden Ansprüche, weiter umfassend den Schritt:
Verwalten der Aufträge des detektierten Objekts (30) in der zentralen Steuereinrichtung (40) in einer Queue, um die Abhängigkeit von anderen Aufträgen auf die aktuelle Pose des Objekts zu modellieren.

14. Verfahren zur Steuerung einer Mehrzahl von mobilen fahrerlosen Manipulatorsystemen (10, 20) nach dem vorhergehenden Anspruch, weiter umfassend den Schritt:
Priorisierung der Aufträge und wenn das detektierte Objekt (30) für die Orientierung eines zweiten fahrerlosen Manipulatorsystems (20) benötigt wird, entscheiden ob die Bahnplanung für das zweite fahrerlose Manipulatorsystem (20) geändert wird in Abhängigkeit der Priorität der Aufträge.

15. System zum Handhaben von zu bewegenden Objekten (30) in einem Logistikumfeld, umfassend eine Mehrzahl von mobilen fahrerlosen Manipulatorsystemen (10, 20) zur Handhabung der Objekte (30), insbesondere fahrerlosen Transportfahrzeugen, und zumindest eine zentrale Steuereinrichtung (40), wobei die Manipulatorsysteme (10, 20) Sensoren zur Orientierung aufweisen und über Kommunikationsmittel verfügen, um mit einer zentralen Steuereinrichtung (40) zu kommunizieren, wobei die Steuereinrichtung (40) und die Mehrzahl von mobilen fahrerlosen Manipulatorsystemen (10, 20) eingerichtet sind, um ein Verfahren nach einem der Verfahrensansprüche 1 bis 14 durchzuführen.

## Claims

1. Method for controlling a plurality of mobile driverless manipulator systems (10, 20), in particular driverless transport vehicles in a logistics environment for moving objects (30), the manipulator systems (10, 20) having sensors for orientation and having communication means to communicate with at least one central control device (40), which comprises the following steps:
- Providing environmental information by the at least one central control device (40),
- Detection of an object (30) to be manipulated by the mobile driverless manipulator systems (10, 20) in the surroundings and determination of the position and pose of the detected object (30);
- Update of the environmental information with the position and pose of the detected object and
- Taking into account the position and pose of the detected object (30) when planning the path of the mobile driverless manipulator systems (10, 20), by checking before a manipulation of the detected object (30) by a first mobile driverless manipulator system (10), whether the detected object (30) is required for the orientation of a second mobile driverless manipulator system (20) .

2. Method for controlling a plurality of mobile driverless manipulator systems (10, 20) according to claim 1, wherein the sensors are optical sensors, in particular laser scanners.

3. Method for controlling a plurality of mobile driverless manipulator systems (10, 20) according to claim 2, wherein the detection of position and pose of the object (30) to be manipulated is carried out using the optical sensors of the manipulator systems (10, 20), and in particular on a comparison based on the acquired sensor data with models of objects to be recognized.

4. Method for controlling a plurality of mobile driverless manipulator systems (10, 20) according to claim 3, wherein the comparison of the detected sensor data with models of objects to be recognized is carried out decentrally in data processing devices of the manipulator systems (10, 20).

5. Method for controlling a plurality of mobile driverless manipulator systems (10, 20) according to one of the preceding claims, wherein the manipulator systems (10, 20) detect the object to be manipulated (30) with the aid of their sensors and a message representative of the position and pose of the object by means of send the communication means to the central control device (40) for updating the environmental information.

6. A method of controlling a plurality of mobile driverless manipulator systems (10, 20) according to the preceding claim, wherein the message is sent using time stamps to capture the exact time of the detection.

7. Method for controlling a plurality of mobile driverless manipulator systems (10, 20) according to the preceding claim, wherein the message contains the pose and the uncertainty of the pose estimate for the detected object (30).

8. Method for controlling a plurality of mobile driverless manipulator systems according to one of the preceding claims, further comprising the steps:
- Use of the updated environmental information by a manipulator system (10, 20) to estimate the position of the detected object (30) relative to the manipulator system (10, 20) and re-detection of this object by means of the sensors of this manipulator system.

9. Method for controlling a plurality of mobile driverless manipulator systems (10, 20) according to one of the preceding claims, further comprising the steps:
- Use of the updated environmental information by a manipulator system (10, 20) to estimate the position of the object (30) relative to the manipulator system and targeted search for this object (30) by this manipulator system to improve the position estimate of this manipulator system.

10. Method for controlling a plurality of mobile driverless manipulator systems (10, 20) according to one of the preceding claims, further comprising the steps:
- Detection of the already detected object (30) by means of the sensors of a manipulator system (10, 20) and use of the sensor data to improve the accuracy of the determination of the position and pose of the object.

11. Method for controlling a plurality of mobile driverless manipulator systems (10, 20) according to one of the preceding claims, further comprising the step:
- If the detected object (30) is required for the orientation of a second driverless manipulator system (20), decide whether the path planning for the second driverless manipulator system (20) is changed.

12. Method for controlling a plurality of mobile driverless manipulator systems (10, 20) according to one of the preceding claims, further comprising the step:
- If the detected object (30) is required for the orientation of a second driverless manipulator system (20), determine the time that the object must remain in position until the second manipulator system has completed its orientation based on the object.

13. Method for controlling a plurality of mobile driverless manipulator systems (10, 20) according to one of the preceding claims, further comprising the step:
- Manage the orders of the detected object (30) in the central control device (40) in a queue in order to model the dependence on other orders on the current pose of the object.

14. Method for controlling a plurality of mobile driverless manipulator systems (10, 20) according to the preceding claim, further comprising the step:
- Prioritization of the orders and if the detected object (30) is required for the orientation of a second driverless manipulator system (20), decide whether the path planning for the second driverless manipulator system (20) is changed depending on the priority of the orders.

15. System for handling objects (30) to be moved in a logistics environment, comprising a plurality of mobile driverless manipulator systems (10, 20) for handling the objects (30), in particular driverless transport vehicles, and at least one central control device (40), the manipulator systems (10, 20) have sensors for orientation and have communication means for communicating with a central control device (40), the control device (40) and the plurality of mobile driverless manipulator systems (10, 20) being set up to carry out a method according to perform one of the method claims 1 to 14.

## Revendications

1. Procédé de commande d'une pluralité de systèmes manipulateurs mobiles sans conducteur (10, 20), en particulier de véhicules de transport sans conducteur dans un environnement logistique pour déplacer des objets (30), les systèmes manipulateurs (10, 20) ayant des capteurs d'orientation et des moyens de communication pour communiquer avec au moins un dispositif de commande central (40), qui comprend les étapes suivantes:
- Fourniture d'informations environnementales par le au moins un dispositif de commande central (40);
- Détection d'un objet (30) devant être manipulé par les systèmes de manipulation mobiles sans conducteur (10, 20) dans l'environnement et détermination de la position et de la pose de l'objet détecté (30);
- Mise à jour des informations environnementales avec la position et la pose de l'objet détect et
- Prise en compte de la position et de la pose de l'objet détecté (30) lors de la planification de la trajectoire des systèmes manipulateurs mobiles sans conducteur (10, 20), en vérifiant avant une manipulation de l'objet détecté (30) par un premier manipulateur mobile sans conducteur système (10), si l'objet détecté (30) est requis pour l'orientation d'un deuxième système de manipulateur mobile sans conducteur (20).

2. Procédé de commande d'une pluralité de systèmes manipulateurs mobiles sans conducteur (10, 20) selon la revendication 1, dans lequel les capteurs sont des capteurs optiques, notamment des scanners laser.

3. Procédé de commande d'une pluralité de systèmes manipulateurs mobiles sans conducteur (10, 20) selon la revendication 2, dans lequel la détection de la position et de la pose de l'objet (30) à manipuler est réalisée à l'aide des capteurs optiques des systèmes manipulateurs (10, 20), et notamment sur une comparaison basée sur les données de capteurs acquises avec des modèles d'objets à reconnaître.

4. Méthode de contrôle d'une pluralité de systèmes de manipulation mobiles sans conducteur (10, 20) selon la revendication 3, dans laquelle la comparaison des données de détection détectées avec des modèles d'objets à reconnaître est effectuée de manière décentralisée dans des dispositifs de traitement de données des systèmes de manipulation (10, 20).

5. Procédé de commande d'une pluralité de systèmes manipulateurs mobiles sans conducteur (10, 20) selon l'une des revendications précédentes, dans lequel les systèmes manipulateurs (10, 20) détectent l'objet à manipuler (30) à l'aide de leurs capteurs et un message représentatif de la position et de la pose de l'objet au moyen de l'envoi des moyens de communication au dispositif de commande central (40) pour la mise à jour des informations environnementales.

6. Procédé de commande d'une pluralité de systèmes manipulateurs mobiles sans conducteur (10, 20) selon la revendication précédente, dans lequel le message est envoyé en utilisant des horodatages pour capturer l'heure exacte de la détection.

7. Procédé de commande d'une pluralité de systèmes manipulateurs mobiles sans conducteur (10, 20) selon la revendication précédente, dans lequel le message contient la pose et l'incertitude de l'estimation de la pose pour l'objet détecté (30).

8. Procédé de commande d'une pluralité de systèmes manipulateurs mobiles sans conducteur selon l'une des revendications précédentes, comprenant en outre les étapes:
- Utilisation des informations environnementales mises à jour par un système manipulateur (10, 20) pour estimer la position de l'objet détecté (30) par rapport au système manipulateur (10, 20) et re-détection de cet objet au moyen des capteurs de ce système de manipulateur.

9. Procédé de commande d'une pluralité de systèmes manipulateurs mobiles sans conducteur (10, 20) selon l'une des revendications précédentes, comprenant en outre les étapes:
- Utilisation des informations environnementales mises à jour par un système manipulateur (10, 20) pour estimer la position de l'objet (30) par rapport au système manipulateur et recherche ciblée de cet objet (30) par ce système manipulateur pour améliorer l'estimation de position de ce système de manipulateur.

10. Procédé de commande d'une pluralité de systèmes manipulateurs mobiles sans conducteur (10, 20) selon l'une des revendications précédentes, comprenant en outre les étapes:
- Détection de l'objet déjà détecté (30) au moyen des capteurs d'un système manipulateur (10, 20) et utilisation des données du capteur pour améliorer la précision de la détermination de la position et de la pose de l'objet.

11. Procédé de commande d'une pluralité de systèmes manipulateurs mobiles sans conducteur (10, 20) selon l'une des revendications précédentes, comprenant en outre l'étape:
- Si l'objet détecté (30) est requis pour l'orientation d'un second système de manipulateur sans conducteur (20), décidez si la planification de trajet pour le deuxième système de manipulateur sans conducteur (20) est modifiée.

12. Procédé de commande d'une pluralité de systèmes manipulateurs mobiles sans conducteur (10, 20) selon l'une des revendications précédentes, comprenant en outre l'étape:
- Si l'objet détecté (30) est requis pour l'orientation d'un second système de manipulateur sans conducteur (20), déterminez le temps pendant lequel l'objet doit rester en position jusqu'à ce que le second système de manipulateur ait terminé son orientation en fonction de l'objet.

13. Procédé de commande d'une pluralité de systèmes manipulateurs mobiles sans conducteur (10, 20) selon l'une des revendications précédentes, comprenant en outre l'étape:
- Gérer les ordres de l'objet détecté (30) dans le dispositif de contrôle central (40) dans une file d'attente afin de modéliser la dépendance des autres ordres à la pose actuelle de l'objet.

14. Procédé de commande d'une pluralité de systèmes manipulateurs mobiles sans conducteur (10, 20) selon la revendication précédente, comprenant en outre l'étape:
- Hiérarchisation des commandes et si l'objet détecté (30) est requis pour l'orientation d'un second système de manipulateur sans conducteur (20), décidez si la planification de trajet pour le second système de manipulateur sans conducteur (20) est modifiée en fonction de la priorité de les commandes.

15. Système de manutention d'objets (30) à déplacer dans un environnement logistique, comprenant une pluralité de systèmes mobiles de manipulation sans conducteur (10, 20) pour manipuler les objets (30), notamment des véhicules de transport sans conducteur, et au moins une commande centrale (40), les systèmes de manipulation (10, 20) ont des capteurs d'orientation et des moyens de communication pour communiquer avec un dispositif de commande central (40), le dispositif de commande (40) et la pluralité de systèmes de manipulation sans conducteur mobiles (10, 20) étant configuré pour exécuter un procédé selon l'une des revendications 1 à 14.
